# EUROPEAN PATENT SPECIFICATION

(11) **EP 3 617 563 B1**
(45) Date of publication and mention of the grant of the patent: **30.12.2020**
(21) Application number: 19194619.3
(22) Date of filing: 30.08.2019
(51) Int. Cl.: F16H 61/431, E02F 9/22, F16H 61/44

(54) **TRAVELING CONTROL MECHANISM AND TRAVELING CONTROL METHOD OF HYDRAULIC DRIVING TYPE CONSTRUCTION MACHINE**
FAHRSTEUERUNGSMECHANISMUS UND FAHRSTEUERUNGSVERFAHREN EINER HYDRAULISCH ANGETRIEBENEN BAUMASCHINE
MÉCANISME DE COMMANDE DE DÉPLACEMENT ET PROCÉDÉ DE COMMANDE DE DÉPLACEMENT DE MACHINE DE CONSTRUCTION DE TYPE À ENTRAÎNEMENT HYDRAULIQUE

(30) Priority: 31.08.2018 JP 2018163278; 29.08.2019 JP 2019156232
(43) Date of publication of application: 04.03.2020
(73) Proprietor: Takeuchi MFG. Co., Ltd., Hanishina-gun, Nagano 389-0605 (JP)
(72) Inventor: SATO, Tomonori, Hanishina-gun, Nagano 3890605 (JP)
(74) Representative: Mewburn Ellis LLP

(56) References cited:
- US-A1- 2013 036 729
- US-A1- 2016 341 308

## Description

### TECHNICAL FIELD

The present invention relates to a traveling control mechanism and a traveling control method of a hydraulic driving type construction machine, and more specifically relates to a traveling control mechanism and a traveling control method of a hydraulic driving type construction machine that uses a hydro static transmission (HST) circuit as a traveling circuit.

### BACKGROUND ART

Among hydraulic driving type construction machines and hydraulic driving type work machines (hereinafter referred to as "construction machine or the like"), there are machines that use a hydro static transmission (HST) circuit as a hydraulic circuit for making a construction machine or the like travel. A construction machine or the like that uses an HST circuit controls a traveling form of the construction machine or the like, such as a traveling speed, in accordance with operation conditions.

For example, a method of load-dependent adjustment of a hydraulic drive proposed in US2016/341308A (Patent Document 1) is a method for ensuring optimum control of the synchronization of two hydraulic motors, and adjusting the hydraulic motors, which power a hydraulic driving mechanism, in accordance with a predetermined operation. Specifically, when a load of a hydraulic motor increases, the hydraulic motor is controlled so that the torque thereof does not drop. That is, the control form of Patent Document 1 is performed using only the hydraulic circuit of a traveling system.

On the other hand, a construction machine is controlled by an operator operating a remote control valve in an operator cabin. A traveling mechanism is also controlled by operation of the remote control valve. Thus, when predetermined control is to be performed on the traveling mechanism, operation of the remote control valve needs to be considered. In this case, the remote control valve may need to be controlled independently of a manual operation thereof.

US2013/036729A discloses a pressure control valve for controlling a travel primary side pressure that is a pressure of a primary side of a travel operation device is controlled by a control unit, thus the travel primary side pressure is controlled, and thereby a traveling speed is intended to be increased, preventing an engine stall.

Patent Document 1 discloses a method for the load-dependent regulation of a hydrostatic drive, with a closed hydraulic fluid circuit comprising a first hydraulic motor and, parallel to this, a second hydraulic motor, whereby both hydraulic motors are capable of being powered by a hydraulic pump via a high-pressure line and a low-pressure line and are mechanically coupled to each other via a transmission. The displacement of the first hydraulic motor can be adjusted proportionally to an electrical signal of an electronic control system by means of an electro-proportional control valve and the displacement of the second hydraulic motor can be adjusted by means of a pressure-proportional control valve which is hydraulically connected to the high-pressure line via a control pressure line. The pressure-proportional control valve can be activated by means of a control pressure which is dependent on the high pressure. By means of automatic opening of the pressure-proportional control valve dependent on the high pressure, proportional to the exceedance of a predefinable pressure limit in the high-pressure line, the displacement of the second hydraulic motor is adjusted by means of a second servo control unit which can be controlled via the pressure-proportional control valve. By means of the electronic control system, the actual volume flow passing through the first hydraulic motor is determined and compared with a target value for the volume flow. Based on a deviation between the actual and target value for the volume flow, the electronic control system calculates an adapted control signal and transmits this to the electro-proportional control valve, as a result of which the displacement of the first hydraulic motor is adaptable by means of a first servo control unit, which is controlled via the electro-proportional control valve.

### DISCLOSURE OF THE INVENTION

### Problems to be Solved by the Invention

Nevertheless, the control form proposed in Patent Document 1 is performed using only the hydraulic circuit of the traveling system without taking into consideration the operation of the remote control valve. Thus, the traveling form of the construction machine corresponding to the operation of the remote control valve cannot be identified, and thus only limited control, that is, control for ensuring that the torque of the hydraulic motor does not drop when the load of a hydraulic motor increases, can be performed.

The present invention is made to solve the above-described problems, and an object of the present invention is to provide a traveling control mechanism and a traveling control method capable of controlling a traveling mechanism taking into consideration operation contents of a remote control valve. Means for Solving the Problems

According to a first aspect of the present invention there is provided a construction machine as specified in claim 1.

According to this invention, the pilot lines are each provided with a pressure sensor that measures the pressure of the hydraulic oil flowing through the pilot line, making it possible to identify operation contents of the remote control valve connected to the pilot line. Further, the traveling control mechanism is provided with a pressure adjusting solenoid valve that adjusts a primary pressure of the hydraulic oil supplied to the remote control valve, making it possible to adjust a secondary pressure of the hydraulic oil supplied from the remote control valve to a pressure corresponding to the primary pressure. Thus, it is possible to perform control independently of and different from the operation contents of the remote control valve while identifying the operation contents. Further, the traveling motor is provided with the rotation sensor that measures the rotation speed of the traveling motor, making it possible to perform control so that the controller outputs a current value appropriate for the pressure adjusting solenoid valve by feedback of the rotation speed signal sent from the rotation sensor to the controller.

The construction machine according to the first aspect of the present invention may optionally be as specified in claim 2.

According to this invention, when the construction machine makes a pivot turn or a spin turn, it is possible to perform control for switching the speed of one or both of the left and right traveling mechanisms to low speed independently of the contents of the manual operation of the remote control valve. Thus, even when the operator operates the remote control valve so that a pivot turn or a spin turn is made at high speed, it is possible to switch the speed of one or both of the traveling mechanisms to low speed to safely turn the construction machine.

The construction machine according to the first aspect of the present invention may optionally be as specified in claim 3.

According to this invention, the traveling control mechanism is configured as described above, making it possible to perform control so that the construction machine travels at the speed set in creep mode, regardless of the operation contents of the remote control valve. Thus, it is possible to make the construction machine travel at a very slow speed.

The construction machine according to the first aspect of the present invention may optionally be as specified in claim 4.

According to this invention, the traveling control mechanism is configured as described above and thus, when the construction machine is traveling at high speed, the traveling speed of the construction machine can be switched to low speed independently of the manual operation contents of the remote control valve, even when a load is applied. This ensures that an overload is not applied to the traveling mechanism, making it possible for the construction machine to travel uphill and the like. Further, when the rotation speeds of the left and right traveling motors are detected as different in creep mode where the traveling speed of the construction machine is even slower than low speed, the pressure adjusting solenoid valve is controlled to make the rotation speeds of the left and right traveling motors identical and maintain this state, thereby improving an automatic straight traveling function of the construction machine.

The construction machine according to the first aspect of the present invention may optionally be as specified in claim 5.

According to this invention, when the construction machine changes from a form where the rotation speed of the traveling motor is low and the engine torque is large to a form where the rotation speed of the traveling motor is high and the engine torque is small, the traveling speed of the construction machine can be automatically switched from low speed to high speed by supplying a flow rate of the hydraulic oil that matches the traveling form of the construction machine to the HST circuit.

The construction machine according to the first aspect of the present invention may optionally be as specified in claim 6.

According to this invention, it is possible to control the traveling mechanism by a speed change when the remote control valve is set to full lever and the pressure sensor detects a pressure equivalent to full lever.

According to a second aspect of the present invention there is provided a method as specified in claim 7.

According to this invention, the operation contents of the remote control valve connected to the pilot lines can be identified. Further, the secondary pressure of the hydraulic oil supplied from the remote control valve can be adjusted to a pressure corresponding to the primary pressure. Thus, it is possible to perform control independently of and different from the operation contents of the remote control valve while identifying the operation contents. Further, it is possible to perform control so that the controller outputs a current value appropriate for the pressure adjusting solenoid valve by feedback of the rotation speed signal sent from the rotation sensor to the controller.

### Advantages of the Invention

According to the present invention, it is possible to provide a traveling control mechanism and a traveling control method capable of controlling a traveling mechanism, taking into consideration operation contents of a remote control valve.

### BRIEF DESCRIPTION OF THE DRAWINGS

Fig. 1 is a side view illustrating an example of a construction machine to which the present invention is applied.
Fig. 2 is a schematic drawing of a system for implementing the present invention.
Fig. 3 is a flow chart simply illustrating a flow of a control form for automatically switching a speed of the construction machine from high speed to low speed.
Fig. 4 is a flow chart simply illustrating a flow of a control form for making the construction machine travel at a speed less than or equal to a traveling speed set in creep mode.
Fig. 5 is a flow chart simply illustrating a flow of a control form for switching the speed of the construction machine from high speed to low speed when a load increases.
Fig. 6 is a flow chart simply illustrating a flow of a control form when changing from a form where a rotation speed of a traveling motor is low and an engine torque is large to a form where the rotation speed of the traveling motor is high and the engine torque is small.
Fig. 7 is a schematic drawing of a system provided with one solenoid valve.

### BEST MODE FOR CARRYING OUT THE INVENTION

Below, embodiments of the present invention will be described with reference to the drawings. The present invention includes inventions of the same technical concept as in embodiments described below and forms illustrated in the drawings, and the technical scope of the present invention is not limited to only the descriptions of the embodiments and the drawings.

### [Construction Machine to which Invention Is Applied]

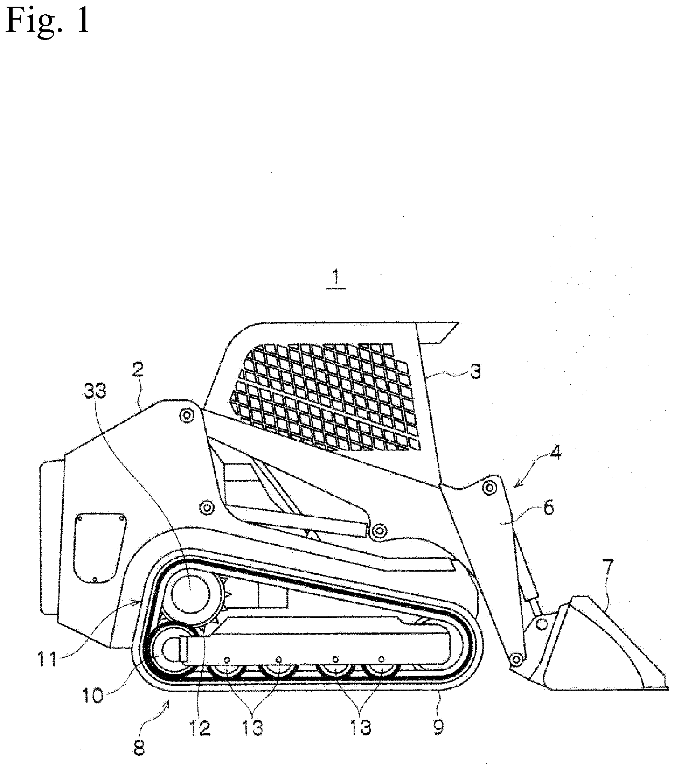

Examples of a construction machine 1 to which the present invention is applied include a hydraulic shovel, a hydraulic track loader, a hydraulic carrier, and the like. Further, examples of a traveling mechanism 8 of these construction machines 1 include both a crawler type and a wheel type. An overview of the configuration of the construction machine 1 is given below using a configuration of a crawler-type hydraulic track loader as an example, with reference to Fig. 1.

Fig. 1 is a side view illustrating an example of a hydraulic track loader. The hydraulic track loader is mainly configured by a main frame 2, an operator cabin 3, a work mechanism 4, and the traveling mechanism 8.

The main frame 2 is a component on which various driving constituents, such as an engine and a hydraulic device of the hydraulic track loader, are incorporated, and supports the operator cabin 3 and the work mechanism 4. The operator cabin 3 is a constituent in which an operator who operates the construction machine 1 sits. The work mechanism 4 is mainly configured by an arm 6 and a bucket 7, and is a constituent for placing soil and the like into a bucket 7 and transporting these, or pushing these forward. The traveling mechanism 8 is configured by a crawler 9 and a driving mechanism 11 that rotationally drives the crawler 9, and is a constituent for making the construction machine 1 travel and turn. The driving mechanism 11 is configured by a traveling motor 33, a sprocket 12 for driving, a plurality of track rollers 10, 13, and the like. It should be noted that the sprocket 12 is integrally configured with the traveling motor 33.

### [Basic Configuration of Invention]

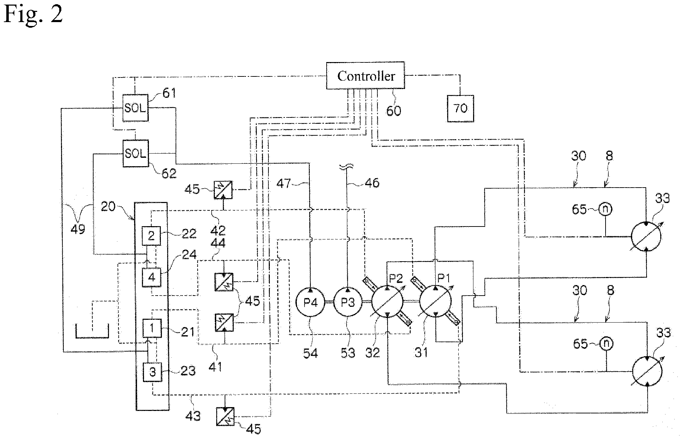

A traveling control mechanism according to the present invention is a mechanism that controls the traveling mechanism 8 configured by an HST circuit 30 and provided to each of a left and a right of the construction machine 1, as illustrated in Fig. 2. The traveling control mechanism comprises remote control valves 21, 22, 23, 24, pressure adjusting solenoid valves 61, 62, a setting mechanism 70, and a controller 60. The remote control valves 21, 22, 23, 24 control an operation of the construction machine 1. The pressure adjusting solenoid valves 61, 62 adjust a primary pressure of a hydraulic oil supplied to the remote control valves 21, 22, 23, 24. The setting mechanism 70 allows a fixed setting in order to make the construction machine 1 perform a desired operation. The controller 60 controls the overall operation of the construction machine 1 including the traveling mechanisms 8. The traveling mechanism 8 is configured to be capable of switching a traveling speed of the construction machine 1 between a high speed and a low speed slower than the high speed, in accordance with an operation amount of the remote control valves 21, 22, 23, 24. The HST circuit 30 is provided with pumps 31, 32 and the traveling motor 33. The pumps 31, 32 is configured by the P1 pump 31 and the P2 pump 32. The P1 pump 31 and the P2 pump 32 connect to pilot lines 41, 42, 43, 44 extending from the remote control valves 21, 22, 23, 24 and allowing the hydraulic oil supplied from the remote control valves 21, 22, 23, 24 to flow therethrough. The pilot lines 41, 42, 43, 44 are each provided with a pressure sensor 45 that measures a pressure of the hydraulic oil flowing through the pilot lines 41, 42, 43, 44, and the traveling motor 33 is provided with a rotation sensor 65 that measures a rotation speed of the traveling motor 33.

The controller 60 controls the pressure adjusting solenoid valves 61, 62 on the basis of a setting signal from the setting mechanism 70, pressure signals from the pressure sensors 45, and a rotation speed signal from the rotation sensor 65, adjusts a secondary pressure of the hydraulic oil supplied from the remote control valves 21, 22, 23, 24, and activates the remote control valves 21, 22, 23, 24 independently of a manual operation ofthe remote control valves 21, 22, 23, 24. Then, the remote control valves 21, 22, 23, 24 adjust a flow rate of the hydraulic oil discharged from the PI pump 31 and the P2 pump 32 by changing or keeping constant the pressure of the hydraulic oil that flows through the pilot lines 41, 42, 43, 44.

A traveling control method of the construction machine 1 according to the present invention is a method for controlling the flow rate of the hydraulic oil discharged from the pumps 31, 32 using the traveling control mechanism configured as described above.

According to the present invention, it is possible to provide a traveling control mechanism and a traveling control method capable of controlling the traveling mechanism 8, taking into consideration operation contents of the remote control valves 21, 22, 23, 24.

### [Overview of System for Implementing Invention]

Fig. 2 shows an overview of a system for implementing the present invention. This system is configured by a hydraulic system and a control system. In Fig. 2, the lines illustrated by a solid line and a broken line indicate the hydraulic system, and the lines illustrated by a dashed line indicate the control system. The hydraulic system comprises the HST circuit 30, the pilot lines 41, 42, 43, 44, the remote control valves 21, 22, 23, 24, and the pressure adjusting solenoid valves 61, 62. Further, the hydraulic system comprises a P3 pump 53 and a P4 pump 54. On the other hand, the control system includes the controller 60. The controller 60 receives output from the hydraulic system, performs fixed processing, and then sends commands to the pressure adjusting solenoid valves 61, 62.

### <Hydraulic system>

### (HST circuit)

The HST circuit 30 is a hydraulic circuit constituting the traveling mechanism 8 of the construction machine 1. Fig. 2 shows a simplified model of the HST circuit 30 for simply explaining the invention. The HST circuit 30 is mainly configured by the PI pump 31, the P2 pump 32, two of the traveling motors 33, and hydraulic hoses and pipes communicating the P1 pump 31 and the P2 pump 32 and the respective traveling motors 33. The HST circuit 30 is provided to each of the traveling mechanisms 8 on both the left and right sides of the construction machine 1.

The P1 pump 31 and the P2 pump 32 are piston pumps, and are configured to be capable of changing the flow rate of the discharged hydraulic oil by changing an inclination angle of an inclined plate inside the pump. Specifically, the inclination angle of the inclined plate inside the pump is changed by changing the pressure of the hydraulic oil supplied from the pilot lines 41, 42, 43, 44 described later.

The traveling motor 33 is a constituent that rotates by the supply of hydraulic oil discharged from the P1 pump 31 and the P2 pump 32. The traveling motor 33 is, for example, connected to the sprocket 12 for driving constituting the traveling mechanism 8 at a rotating shaft, and rotationally drives the crawler 9 by rotating the sprocket 12 for driving, thereby making the construction machine 1 travel. The rotation speed of the traveling motor 33 is set by the flow rate ofthe hydraulic oil fed from the PI pump 31 and the P2 pump 32. That is, when the flow rate of the hydraulic oil fed from the P1 pump 31 and the P2 pump 32 is relatively low, the rotation speed of the traveling motor 33 is relatively slow, and when the flow rate of the hydraulic oil fed from the P1 pump 31 and P2 pump 32 is relatively high, the rotation speed of the traveling motor 33 is relatively fast. Further, a mechanism that adjusts the flow rate of the hydraulic oil introduced into the traveling motor 33 is provided to the traveling motor 33 itself. Such traveling motors 33 are each provided with the rotation sensor 65 that measures a rotation speed of the traveling motor 33.

### (P3 line)

AP3 line 46 is a hydraulic line connected to the P3 pump 53 illustrated in Fig. 2. The P3 line 46, while not particularly illustrated in the drawing, supplies hydraulic oil to a control valve that controls the work mechanism 4 configured by a boom 5 and the like.

### (P4 line)

A P4 line 47 is a hydraulic line connected to the P4 pump 54 illustrated in Fig. 2. The P4 line 47, while not particularly illustrated in the drawing, branches from the pilot line 47, introduces hydraulic oil into the traveling motors 33, turns the parking brake on and off, and switches between high speed and low speed. Further, the P4 line 47 is connected to the pressure adjusting solenoid valves 61, 62, as illustrated in Fig. 2. The pressure adjusting solenoid valves 61, 62, as described later, are connected to a remote control valve unit 20 by a primary pilot line 49. This primary pilot line 49 supplies hydraulic oil to the four remote control valves 21, 22, 23, 24 constituting the remote control valve unit 20.

Specifically, as illustrated in Fig. 2, the two pressure adjusting solenoid valves 61, 62 are provided. The first pressure adjusting solenoid valve 61 communicates with the first remote control valve 21 and the third remote control valve 23 of the four remote control valves 21, 22, 23, 24 constituting the remote control valve unit 20. Further, the second pressure adjusting solenoid valve 62 communicates with the second remote control valve 22 and the fourth remote control valve 24.

### (Pilot line)

The pilot lines 41, 42, 43, 44 are hydraulic lines that control the flow rate of the hydraulic oil discharged from the P1 pump 31 and the P2 pump 32. That is, the pilot lines 41, 42, 43, 44 constitute the secondary pilot line. However, here, the secondary pilot line is described as the "pilot lines 41, 42, 43, 44."

The pilot lines 41, 42, 43, 44 communicate the remote control valves 21, 22, 23, 24 described later and the P1 pump 31 and the P2 pump 32. The pressure of the hydraulic oil flowing through the pilot lines 41, 42, 43, 44 is changed by operation of the remote control valves 21, 22, 23, 24. Two of the pilot lines 41, 42, 43, 44 are respectively provided to the P1 pump 31 and the P2 pump 32, as illustrated in Fig. 2. Specifically, the P1 pump 31 communicates with the first remote control valve 21 and the third remote control valve 23 by the pilot lines 41, 43, and the P2 pump 32 communicates with the second remote control valve 22 and the fourth remote control valve 24 by the pilot lines 42, 44.

These pilot lines 41, 42, 43, 44 are each provided with the pressure sensor 45 that measures a pressure of the hydraulic oil flowing through the pilot lines 41, 42, 43, 44.

### (Remote control valve)

The remote control valve unit 20 illustrated in Fig. 2 is configured by the four remote control valves 21, 22, 23, 24 and the four remote control valves 21, 22, 23, 24 constitute the one remote control valve unit 20. The remote control valves 21, 22, 23, 24 are manually operated using a joystick (not illustrated) by the operator. The remote control valves 21, 22, 23, 24 supply hydraulic oil to the pilot lines 41, 42, 43, 44 in accordance with the manual operation. Specifically, the first remote control valve 21 and the third remote control valve 23 control the flow rate of the hydraulic oil discharged by the P1 pump 31 by supplying the hydraulic oil from the first pressure adjusting solenoid valve 61 to the P1 pump 31 in accordance with a manual operation of the joystick by the operator. On the other hand, the second remote control valve 22 and the fourth remote control valve 24 control the flow rate of the hydraulic oil discharged by the P2 pump 32 by supplying the hydraulic oil from the second pressure adjusting solenoid valve 62 to the P2 pump 32 in accordance with a manual operation of the joystick by the operator.

Such four remote control valves 21, 22, 23, 24 are configured to be activated independently of the manual operation of the remote control valves 21, 22, 23, 24 so as to adjust the pressure of the hydraulic oil supplied from the remote control valves 21, 22, 23, 24 on the basis of the command of the controller 60 described later.

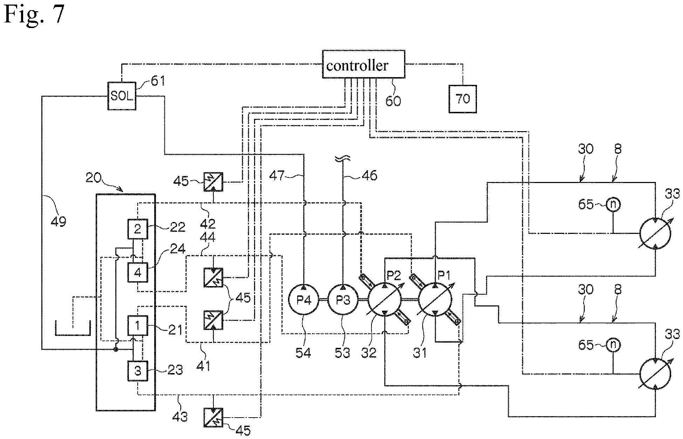

It should be noted that, as illustrated in the system schematic drawing in Fig. 7, the system may be provided with the one pressure adjusting solenoid valve 61. In this mode, the one pressure adjusting solenoid valve 61 is connected to the remote control valve unit 20 by the pilot line 49. The pilot line 49 supplies hydraulic oil to the four remote control valves 21, 22, 23, 24 constituting the remote control valve unit 20. Specifically, in the first remote control valve 21 and the third remote control valve 23, the hydraulic oil is supplied from the pressure adjusting solenoid valve 61, and the flow rate of the hydraulic oil discharged by the P1 pump 31 is controlled by supplying the hydraulic oil to the P1 pump 31 in accordance with a manual operation of the joystick by the operator. On the other hand, in the second remote control valve 22 and the fourth remote control valve 24 as well, the hydraulic oil is supplied from the same pressure adjusting solenoid valve 61, and the flow rate of the hydraulic oil discharged by the P2 pump 32 is controlled by supplying the hydraulic oil to the P2 pump 32 in accordance with a manual operation of the joystick by the operator. It should be noted that all other components are the same as those in the system schematic drawing illustrated in Fig. 2.

### <Control system>

According to the present invention, the controller 60, the pressure sensors 45, the rotation sensor 65, and the setting mechanism 70 are used as the control system. The controller 60 is, for example, provided in an interior of the main frame 2, and controls the overall operation of the construction machine 1.

The pressure sensor 45 is attached to each of the pilot lines 41, 42, 43, 44 communicating the remote control valves 21, 22, 23, 24 and the P1 pump 31 and the P2 pump 32. As mentioned above, the first remote control valve 21 and the third remote control valve 23 communicate the P1 pump 31 with the pilot lines 41, 43, and the second remote control valve 22 and the fourth remote control valve 24 communicate the P2 pump 32 with the pilot lines 42, 44. The pressure sensors 45 are each electrically connected with the controller 60, and send pressure signals corresponding to the measured pressure of the hydraulic oil flowing through the pilot lines 41, 42, 43, 44 to the controller 60.

The rotation sensor 65 is a sensor that measures the rotation speed of the traveling motor 33, and is attached to each of the left and right traveling motors 33. The rotation sensor 65 is electrically connected with the controller 60, and sends rotation speed signals corresponding to the measured rotation speeds of the traveling motors 33 to the controller 60.

The setting mechanism 70 is a device for setting the traveling speed of the construction machine 1 so that the construction machine 1 travels in creep mode, which is even slower than low speed. Specifically, the setting mechanism 70 sets an upper limit of the speed at which the construction machine 1 travels, and executes settings so that the construction machine 1 travels at a speed slower than the set upper limit speed. The setting signal set by the setting mechanism 70 is sent to the controller 60.

### [Control Details]

### <First control form>

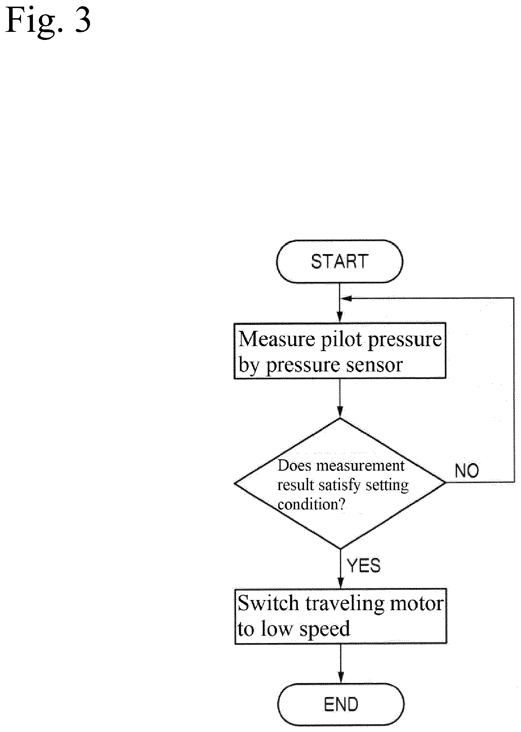

A first control form is a form for adjusting the pressure of the hydraulic oil supplied from the remote control valves 21, 22, 23, 24, and automatically switching the speed of one or both of the left and right traveling mechanisms 8 from high speed to low speed. Fig. 3 is a flow chart simply illustrating a flow of the control form for automatically switching the speed of the construction machine 1 from high speed to low speed. As illustrated in Fig. 3, according to the first control form, the pressure sensors 45 measure the pressure of the hydraulic oil flowing through the pilot lines 41, 42, 43, 44, and the controller 60 judges whether or not the pressure of the hydraulic oil flowing through the pilot lines 41, 42, 43, 44 satisfies preset conditions. When the conditions are satisfied, the controller 60 controls the traveling mechanisms 8 so that the speed of one or both of the left and right traveling mechanisms 8 is automatically switched from high speed to low speed. As two representative control forms of the first control form, a spin turn and a pivot turn will be described.

### (Spin turn)

The spin turn is an operation that turns an orientation of the overall construction machine 1 on the spot by moving one of the left and right traveling mechanisms 8 forward and the other backward. The control when the spin turn is performed will be described in accordance with Fig. 3.

First, the pressure (pilot pressure) of the hydraulic oil flowing through the pilot lines 41, 42, 43, 44 when the remote control valves 21, 22, 23, 24 are operated by the operator is measured by the pressure sensors 45. It should be noted that the operation amount of the remote control valves 21, 22, 23, 24 corresponds to the measured value. That is, when the measured value is large, the operation amount of the remote control valves 21, 22, 23, 24 is large, and when the measured value is small, the operation amount of the remote control valves 21, 22, 23, 24 is small.

Next, the controller 60 judges whether or not one of the left and right traveling mechanisms 8 is moved forward and the other is moved backward in the operation of the operator on the basis of the pressure signals from the pressure sensors 45. When the controller 60 judges that one of the left and right traveling mechanisms 8 is moving forward and the other is moving backward, the controller 60 automatically switches the speed of both the left and right traveling mechanisms 8 from high speed to low speed, regardless of the operation amount of the remote control valves 21, 22, 23, 24 by the operator. As a result, a turning performance when the spin turn is performed is improved.

### (Pivot turn)

The pivot turn is an operation that turns the orientation of the overall construction machine 1 by moving one of the left and right traveling mechanisms 8 forward or backward and stopping the other. The control when the pivot turn is performed will be described in accordance with Fig. 3.

First, the pressure (pilot pressure) of the hydraulic oil flowing through the pilot lines 41, 42, 43, 44 when the remote control valves 21, 22, 23, 24 are operated by the operator is measured by the pressure sensors 45. Next, the controller 60 judges whether or not one of the left and right traveling mechanisms 8 is moving forward or backward in the operation of the operator, and the other is stopped on the basis of the pressure signal from the pressure sensors 45. When the controller 60 judges that one of the left and right traveling mechanisms 8 is moving forward or backward and the other is stopped, the controller 60 automatically switches from high speed to low speed by controlling the pressure of the hydraulic oil supplied from the remote control valves 21, 22, 23, 24 controlling the one traveling mechanism 8, regardless of the operation amount of the remote control valves 21, 22, 23, 24 by the operator. As a result, the turning performance when the pivot turn is performed is improved.

### <Second control form>

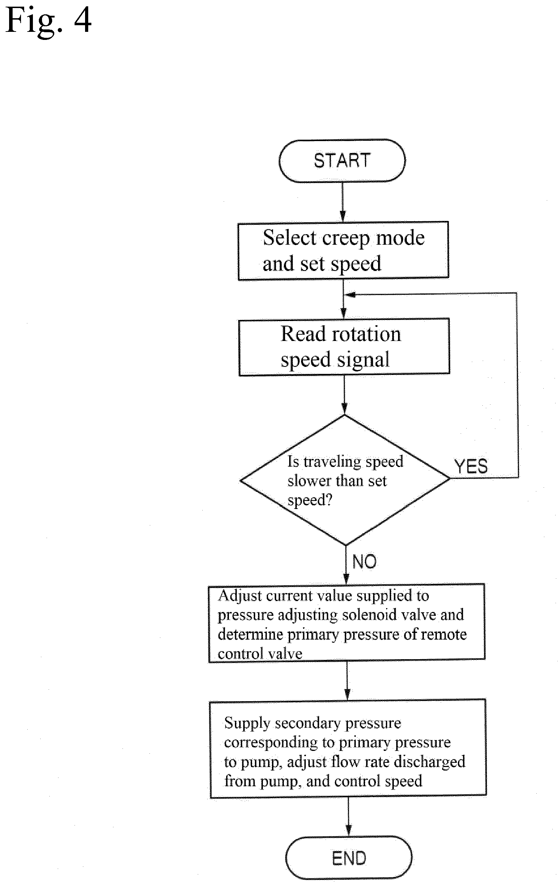

A second control form is a form for controlling the traveling speed of the construction machine 1 so that the construction machine 1 travels in creep mode when ultra-low speed mode (hereinafter referred to as "creep mode") even slower than low speed mode is provided in addition to high speed mode and low speed mode as a traveling form of the construction machine 1. In the second control form, the setting mechanism 70 is used for setting the traveling speed of the construction machine 1 to ensure that the traveling speed of the construction machine 1 does not exceed a predetermined speed. Examples of the setting mechanism 70 include a display device, a dial mechanism, and the like. An overview of the flow of the control form for controlling the traveling speed of the construction machine 1 thus set by the setting mechanism 70 will be described in accordance with Fig. 4.

First, creep mode is selected and the traveling speed of the construction machine 1 is set by the setting mechanism 70. Further, the controller 60 reads the rotation speed signal from the rotation sensor 65, compares the traveling speed of the construction machine 1 calculated on the basis of the rotation speed signal and the set speed in creep mode set by the setting mechanism 70, and judges whether or not the traveling speed is slower than the set speed. When the controller 60 judges that the current traveling speed is faster than the set speed, the controller 60 sends a command corresponding to the set speed to the pressure adjusting solenoid valves 61, 62. That is, the current value corresponding to the set speed is supplied to the pressure adjusting solenoid valves 61, 62. The pressure adjusting solenoid valves 61, 62 determine the primary pressure of the hydraulic oil supplied to the remote control valves 21, 22, 23, 24 by the supply of the current value corresponding to the set speed. The remote control valves 21, 22, 23, 24 supply the secondary pressure of the hydraulic oil corresponding to the determined primary pressure to the P1 pump 31 and the P2 pump 32 via the pilot lines 41, 42, 43, 44 independently of the operation ofthe remote control valves 21, 22, 23, 24. The P1 pump 31 and the P2 pump 32 supply the hydraulic oil of the flow rate corresponding to the secondary pressure of the hydraulic oil to the traveling motor 33. The flow rate of the supplied hydraulic oil is a flow rate at which the traveling motor 33 rotates slower than the set traveling speed. The construction machine 1, by such control, is controlled so as to travel at a speed slower than the set speed.

### <Third control form>

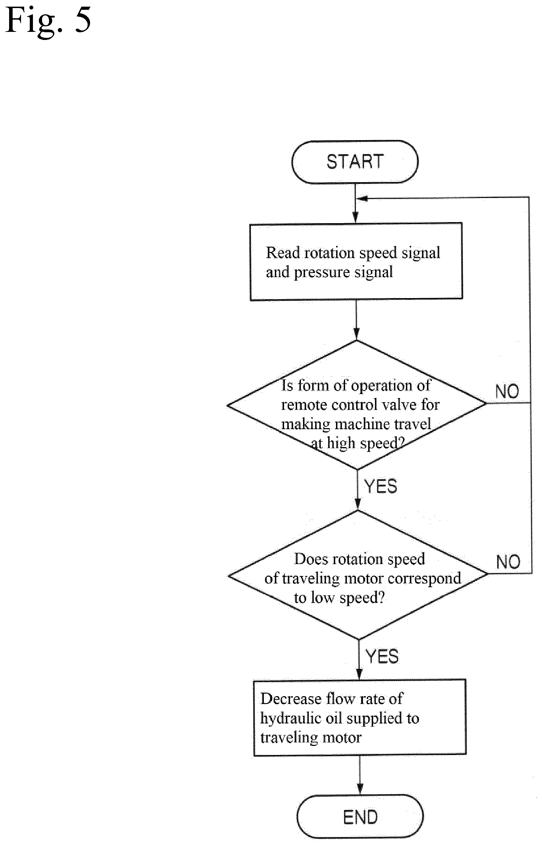

When the construction machine 1 climbs uphill, for example, a load of the traveling mechanism 8 increases more than when traveling on flat ground. A third control form is a form for controlling the traveling mechanism 8 when the load of the traveling mechanism 8 increases. Whether or not the load of the traveling mechanism 8 increases is judged by measuring the rotation speed and an engine torque of the traveling motor 33. That is, when the rotation speed of the traveling motor 33 has decreased, it is judged that the load of the traveling mechanism 8 has increased. A case where the travel load increases will be described in accordance with Fig. 5.

First, the controller 60 reads the rotation speed signal from the rotation sensor 65, and the pressure signals from the pressure sensors 45. Further, in this process, the engine torque is also read. Next, on the basis of the pressure signals, the controller 60 judges the contents of the operation of the remote control valves 21, 22, 23, 24 operated by the operator. Specifically, the controller 60 judges whether the operation that makes the construction machine 1 travel at low speed or at high speed is performed. When it is judged that the operation that makes the construction machine 1 travel at high speed is performed, the controller 60 judges whether the construction machine 1 is traveling at high speed or at low speed on the basis of the rotation speed signal. Regardless if the operation that makes the construction machine 1 travel at high speed is performed, when the construction machine 1 is traveling at low speed, the controller 60 judges that the load of the traveling mechanism 8 is increasing.

When it is judged that the load is increasing, the flow rate of the hydraulic oil supplied to the traveling motor 33 is decreased. Specifically, the following control is executed. First, the controller 60 changes the current value supplied to the pressure adjusting solenoid valves 61, 62 and determines the primary pressure of the hydraulic oil supplied to the remote control valves 21, 22, 23, 24. As a result, the secondary pressure of the hydraulic oil supplied from the remote control valves 21, 22, 23, 24 is adjusted to a pressure corresponding to the primary pressure and the hydraulic oil is supplied to the pump. The pump is activated so that the flow rate of the hydraulic oil discharged from the pump is decreased in accordance with the secondary pressure, thereby switching the traveling speed of the construction machine 1 to low speed. With such control performed, the load applied to the traveling mechanism 8 is decreased.

Next, the control when changing from the form of climbing uphill to the form of traveling on flat ground will be described. When the construction machine 1 climbs uphill at low speed, the rotation speed of the traveling motor 33 is low, and the engine torque is large. On the other hand, when the construction machine 1 travels on flat ground at high speed, the rotation speed of the traveling motor 33 is high, and the engine torque is small. When the traveling form of the construction machine 1 is changed from the form of climbing uphill at low speed to the form of traveling on flat ground, the traveling form of the construction machine 1 is automatically switched from low speed to high speed. When, at this time, the construction machine 1 changes from the form of climbing to the form of traveling on flat ground, the rotation speed and the engine torque of the traveling motor 33 are measured, and the form is switched from low speed to high speed.

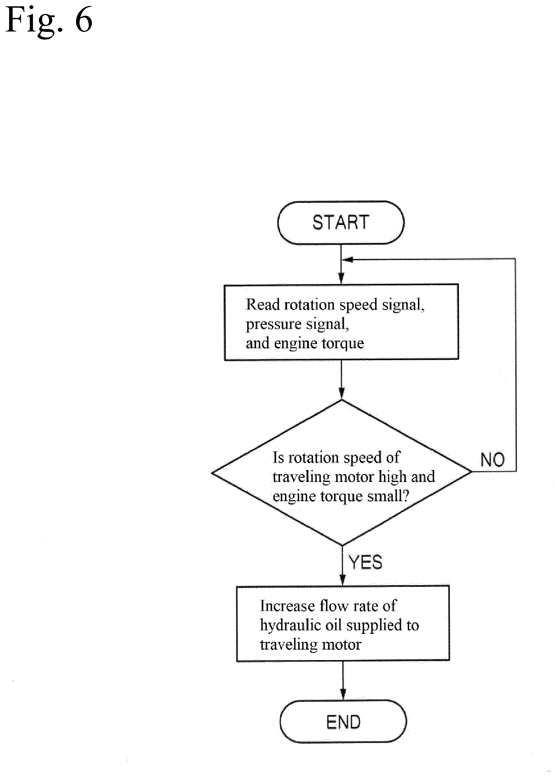

First, as illustrated in Fig. 6, the controller 60 reads the rotation speed signal, the engine torque, and the pressure signals. Next, the controller 60 judges whether or not the rotation speed of the traveling motor 33 is high and the engine torque is small on the basis of the read signals. When the controller 60 judges that the rotation speed of the traveling motor 33 is high and the engine torque is small, the controller 60 changes the current value supplied to the pressure adjusting solenoid valves 61, 62. The pressure adjusting solenoid valves 61, 62 supply the primary pressure corresponding to the current value to the remote control valves 21, 22, 23, 24. The remote control valves 21, 22, 23, 24 supply the secondary pressure corresponding to the primary pressure to the pump. The pump is activated so that the flow rate of the hydraulic oil discharged from the pump is increased in accordance with the secondary pressure, thereby switching the traveling speed of the construction machine 1 to high speed. With such control performed, the traveling form of the construction machine 1 once changed to low speed is automatically switched to high speed.

### (Automatic transmission mechanism)

In each of the control forms described above, the transmission function automatically switches to first gear when the speed gradually drops to about a speed of first gear during travel in second gear. Subsequently, when the load is reduced, the speed automatically returns to second gear. This return to second gear is controlled in accordance with an engine load factor.

On the other hand, as another transmission function, when operation of the remote control valves 21, 22, 23, 24 is set to full lever and a pressure signal from the pressure sensor 45 detects pressure equivalent to full lever, the speed switches to first gear when the traveling speed in second gear becomes less than or equal to a set value. Then, when the speed in first gear increases to a speed greater than or equal to a set value, the speed returns to second gear. The set value for switching from second gear to first gear can be set as desired (such as at most 35% of the speed of second gear, for example), and the set value for switching from first gear to second gear can also be set as desired (such as at least 60% of the speed of second gear, for example).

### Explanation of Reference Numerals

- 1: Construction machine
- 2: Main frame
- 3: Operator cabin
- 4: Work mechanism
- 6: Arm
- 7: Bucket
- 8: Traveling mechanism
- 9: Crawler
- 10: Track roller
- 11: Driving mechanism
- 12: Sprocket
- 13: Track roller

- 20: Remote control valve unit
- 21,22,23,24: Remote control valves
- 21: First remote control valve
- 22: Second remote control valve
- 23: Third remote control valve
- 24: Fourth remote control valve
- 30: HST circuit
- 31,32: Pumps
- 31: P1 pump
- 32: P2 pump
- 33: Traveling motor
- 41,42,43,44: Pilot line
- 45: Pressure sensor
- 46: P3 line
- 47: P4 line
- 49: Primary pilot line
- 53: P3 pump
- 54: P4 pump
- 60: Controller
- 61, 62: Pressure adjusting solenoid valves
- 61: First pressure adjusting solenoid valve
- 62: Second pressure adjusting solenoid valve
- 65: Rotation sensor
- 70: Setting mechanism

## Claims

1. A construction machine (1) comprising:
a left traveling mechanism (8) provided to a left of the construction machine (1) and configured by a first HST circuit (30);
a right traveling mechanism (8) provided to a right of the construction machine (1) and configured by a second HST circuit (30); and
a traveling control mechanism that controls the left and right traveling mechanisms (8);
wherein the traveling control mechanism comprises:
remote control valves (21, 22, 23, 24) that control an operation of the construction machine (1);
one or more pressure adjusting solenoid valves (61, 62) that adjust a primary pressure of a hydraulic oil supplied to the remote control valves (21, 22, 23, 24);
a setting mechanism (70) for executing a fixed setting to make the construction machine (1) perform a desired operation; and
a controller (60) for controlling the left and right traveling mechanisms (8), wherein:
the left and right traveling mechanisms (8) are configured to be capable of switching a traveling speed of the construction machine (1) between a high speed and a low speed slower than the high speed, in accordance with operation amounts of the remote control valves (21, 22, 23, 24),
the first and second HST circuits (30) are each provided with a pump (31, 32) and a traveling motor (33),
the pumps (31, 32) are each connected to pilot lines (41, 42, 43, 44) extending from the remote control valves (21, 22, 23, 24) and allowing the hydraulic oil supplied from the remote control valves (21, 22, 23, 24) to flow therethrough,
the pilot lines (41, 42, 43, 44) are each provided with a pressure sensor (45) that measures a pressure of the hydraulic oil flowing through the pilot line (41, 42, 43, 44),
the traveling motors (33) are each provided with a rotation sensor (65) that measures a rotation speed of the traveling motor (33),
the controller (60) is configured to activate the remote control valves (21, 22, 23, 24) independently of a manual operation thereof so as to adjust the pressure of the hydraulic oil supplied from the remote control valves (21, 22, 23, 24) on the basis of a setting signal from the setting mechanism (70), pressure signals from the pressure sensors (45), and rotation speed signals from the rotation sensors (65), and
the remote control valves (21, 22, 23, 24) are configured to adjust a flow rate of the hydraulic oil discharged from each of the pumps (31, 32) by changing or keeping constant the pressure of the hydraulic oil that flows through the pilot lines (41, 42, 43, 44).

2. The construction machine according to claim 1, wherein:
the controller (60) is configured to judge whether the remote control valves (21, 22, 23, 24) performed an operation for moving one of the left and right traveling mechanisms (8) forward or backward, or one of the left and right traveling mechanisms (8) forward and the other backward, on the basis of pressure signals from the pressure sensors (45), and is configured to activate so as to change a current value supplied to the one or more pressure adjusting solenoid valves (61, 62), determine the primary pressure of the hydraulic oil supplied to the operated remote control valve (21, 22, 23, 24), and adjust the secondary pressure of the hydraulic oil supplied from the operated remote control valve (21, 22, 23, 24) to a pressure corresponding to the primary pressure to supply the hydraulic oil to the corresponding pump (31, 32), and
the corresponding pump (31, 32) is activated so that the flow rate of the hydraulic oil discharged from the corresponding pump (31, 32) is kept constant in accordance with the secondary pressure, thereby switching the traveling speed of one or both of the left and right traveling mechanisms (8) corresponding to the operated remote control valve (21, 22, 23, 24) from high speed to low speed.

3. The construction machine according to claim 1 or 2, wherein:
the setting mechanism (70) is configured so that the traveling speed of the construction machine (1) can be set to creep mode where a traveling speed of the construction machine (1) is slower than the low speed,
the controller (60) is configured to compare a traveling speed of the construction machine (1) calculated on the basis of the rotation speed signals and a set speed in creep mode set by the setting mechanism (70) and, when the traveling speed exceeds the set speed, is configured to activate so as to change a current value supplied to the one or more pressure adjusting solenoid valves (61, 62), determine the primary pressure of the hydraulic oil supplied to the remote control valves (21, 22, 23, 24), and adjust the secondary pressure of the hydraulic oil supplied from the remote control valves (21, 22, 23, 24) to a pressure corresponding to the primary pressure to supply the hydraulic oil to the pumps (31, 32), and
the pumps (31, 32) are activated so that the flow rate of the hydraulic oil discharged from the each of the pumps (31, 32) is kept constant in accordance with the secondary pressure, thereby making the construction machine (1) travel at the set speed in creep mode set by the setting mechanism (70).

4. The construction machine according to any one of claims 1 to 3, wherein:
regardless of whether an operation of the remote control valves (21, 22, 23, 24) is a form for making the construction machine (1) travel at the high speed, when the controller (60) judges that the construction machine (1) is traveling at the low speed on the basis of the rotation speed signals,
the controller (60) is configured to activate so as to change a current value supplied to the one or more pressure adjusting solenoid valves (61, 62), determine the primary pressure of the hydraulic oil supplied to the remote control valves (21, 22, 23, 24), and adjust the secondary pressure of the hydraulic oil supplied from the remote control valves (21, 22, 23, 24) to a pressure corresponding to the primary pressure to supply the hydraulic oil to the pumps (31, 32), and
the pumps (31, 32) are activated so that the flow rate of the hydraulic oil discharged from each of the pumps (31, 32) is decreased in accordance with the secondary pressure, thereby switching the traveling speed of the construction machine (1) to the low speed.

5. The construction machine according to any one of claims 1 to 4, wherein:
when changing from a form where the rotation speed of the traveling motors (33) of the construction machine (1) is low and an engine torque is large to a form where the rotation speed of the traveling motors (33) is high and the engine torque is small,
the controller (60) is activated so as to change a current value supplied to the one or more pressure adjusting solenoid valves (61, 62), determine the primary pressure of the hydraulic oil supplied to the remote control valves (21, 22, 23, 24), and adjust the secondary pressure of the hydraulic oil supplied from the remote control valves (21, 22, 23, 24) to a pressure corresponding to the primary pressure to supply the hydraulic oil to the pumps (31, 32), and
the pumps (31, 32) are activated so that the flow rate of the hydraulic oil discharged from each of the pumps (31, 32) is increased in accordance with the secondary pressure, thereby automatically switching the traveling speed of the construction machine (1) from the low speed to the high speed.

6. The construction machine according to any one of claims 1 to 3, wherein,
when operation of the remote control valve (21, 22, 23, 24) is set to full lever and a pressure signal from a pressure sensor (45) detects pressure equivalent to full lever, the traveling speed is automatically switched from high speed to low speed when less than or equal to a set value, and from low speed to high speed when greater than or equal to a set value.

7. A traveling control method for controlling a construction machine (1) comprising a left traveling mechanism (8) provided to a left of the construction machine (1) and configured by a first HST circuit (30), and a right traveling mechanism (8) provided to a right of the construction machine (1) and configured by a second HST circuit (30), the traveling control method comprising the steps of:
providing remote control valves (21, 22, 23, 24) that control an operation of the construction machine (1), one or more pressure adjusting solenoid valves (61, 62) that adjust a primary pressure of a hydraulic oil supplied to the remote control valves (21, 22, 23, 24), a setting mechanism (70) for executing a fixed setting to make the construction machine (1) perform a desired operation, and a controller (60) for controlling the left and right traveling mechanisms (8) to a traveling control mechanism;
configuring the left and right traveling mechanisms (8) to be capable of switching a traveling speed of the construction machine (1) between a high speed and a low speed slower than the high speed, in accordance with operation amounts of the remote control valves (21, 22, 23, 24);
providing a pump (31, 32) and a traveling motor (33) to each of the first and second HST circuits (30);
connecting pilot lines (41, 42, 43, 44) extending from the remote control valves (21, 22, 23, 24) and allowing the hydraulic oil supplied from the remote control valves (21, 22, 23, 24) to flow therethrough to the pumps (31, 32);
attaching to each of the pilot lines (41, 42, 43, 44) a pressure sensor (45) that measures a pressure of the hydraulic oil flowing through the pilot line (41, 42, 43, 44);
attaching to each of the traveling motors (33) a rotation sensor (65) that measures a rotation speed of the traveling motor (33);
activating the remote control valves (21, 22, 23, 24) independently of a manual operation of the remote control valves (21, 22, 23, 24) by the controller (60) so as to adjust the pressure of the hydraulic oil supplied from the remote control valves (21, 22, 23, 24) on the basis of a setting signal from the setting mechanism (70), pressure signals from the pressure sensors (45), and rotation speed signals from the rotation sensors (65); and
adjusting a flow rate of the hydraulic oil discharged from each of the pumps (31, 32) by the remote control valves (21, 22, 23, 24) by changing or keeping constant the pressure of the hydraulic oil that flows through the pilot lines (41, 42, 43, 44).

## Patentansprüche

1. Baumaschine (1), die Folgendes umfasst:
einen linken Laufmechanismus (8), der auf einer linken Seite der Baumaschine (1) bereitgestellt ist und durch eine erste HST-Schaltung (30) konfiguriert ist; und
eine rechte Laufmechanismus (8), die auf einer rechten Seite der Baumaschine (1) bereitgestellt ist und durch eine zweite HST-Schaltung (30) konfiguriert ist; und
einen Laufsteuermechanismus, der den linken und den rechten Laufmechanismus (8) steuert; wobei der Laufsteuermechanismus Folgendes umfasst:
ferngesteuerte Ventile (21, 22, 23, 24), die einen Betrieb der Baumaschine (1) steuern;
ein oder mehrere Druckanpassungs-Solenoidventile (61, 62), die einen Primärdruck eines Hydrauliköls, das den ferngesteuerten Ventilen (21, 22, 23, 24) zugeführt wird, anpassen;
einen Einstellungsmechanismus (70) zum Ausführen einer fixen Einstellung, damit die Baumaschine (1) einen gewünschten Vorgang ausführt; und
eine Steuereinheit (60) zum Steuern des linken und des rechten Laufmechanismus (8), wobei:
der linke und der rechte Laufmechanismus (8) ausgelegt sind, um dazu in der Lage zu sein, eine Laufgeschwindigkeit der Baumaschine (1) zwischen einer hohen Geschwindigkeit und einer niedrigen Geschwindigkeit, die niedriger ist als die hohe Geschwindigkeit, gemäß Betätigungsausmaßen der ferngesteuerten Ventile (21, 22, 23, 24) umzuschalten,
wobei die erste und die zweite HST-Schaltung (30) jeweils mit einer Pumpe (31, 32) und einem Laufmotor (33) bereitgestellt sind,
wobei die Pumpen (31, 32) jeweils mit Steuerleitungen (41, 42, 43, 44) verbunden sind, die sich von den ferngesteuerten Ventilen (21, 22, 23, 24) erstrecken und ermöglichen, dass das aus den ferngesteuerten Ventilen (21, 22, 23, 24) zugeführte Hydrauliköl durch diese strömt,
wobei die Steuerleitungen (41, 42, 43, 44) jeweils mit einem Drucksensor (45) bereitgestellt sind, der einen Druck des durch die Steuerleitungen (41, 42, 43, 44) strömenden Hydrauliköls misst,
wobei die Laufmotoren (33) jeweils mit einem Rotationssensor (65) bereitgestellt sind, der eine Drehzahl des Laufmotors (33) misst,
wobei die Steuereinheit (60) ausgelegt ist, um die ferngesteuerten Ventile (21, 22, 23, 24) unabhängig von einer manuellen Betätigung davon so zu aktivieren, um den Druck des aus den ferngesteuerten Ventilen (21, 22, 23, 24) zugeführten Hydrauliköls basierend auf einem Einstellungssignal von dem Einstellungsmechanismus (70), Drucksignalen von den Drucksensoren (45) und Drehzahlsignalen von den Rotationssensoren (65) anzupassen und
wobei die ferngesteuerten Ventile (21, 22, 23, 24) ausgelegt sind, um eine Strömungsrate des aus jeder der Pumpen (31, 32) ausgegebenen Hydrauliköls durch Ändern oder Konstanthalten des Drucks des durch die Steuerleitungen (41, 42, 43, 44) strömenden Hydrauliköls anzupassen.

2. Baumaschine nach Anspruch 1, wobei:
die Steuereinheit (60) ausgelegt ist, um basierend auf Drucksignalen von den Drucksensoren (45) zu beurteilen, ob die ferngesteuerten Ventile (21, 22, 23, 24) einen Vorgang zum Vorwärts- oder Rückwärtsbewegen eines aus dem linken und dem rechten Laufmechanismus (8) oder zum Vorwärtsbewegen eines aus dem linken und dem rechten Laufmechanismus (8) und zum Rückwärtsbewegen des anderen durchgeführt haben, und ausgelegt ist, um aktiviert zu werden, um einen Stromwert, der dem einen oder den mehreren Druckanpassungs-Solenoidventilen (61, 62) zugeführt wurde, zu ändern, den Primärdruck des an das betätigte ferngesteuerte Ventil (21, 22, 23, 24) zugeführten Hydrauliköls zu bestimmen, und den Sekundärdruck des aus dem betätigten ferngesteuerten Ventil (21, 22, 23, 24) zugeführten Hydrauliköls auf einen Druck zu ändern, der dem Primärdruck entspricht, um das Hydrauliköl der entsprechenden Pumpe (31, 32) zuzuführen und
die entsprechende Pumpe (31, 32) so aktiviert wird, dass die Strömungsrate des von der entsprechenden Pumpe (31, 32) ausgegebenen Hydrauliköls gemäß dem Sekundärdruck konstant gehalten wird, wodurch die Laufgeschwindigkeit eines des linken und des rechten Laufmechanismus (8) oder von beiden entsprechend des betätigten ferngesteuerten Ventils (21, 22, 23, 24) von einer hohen Geschwindigkeit auf eine niedrige Geschwindigkeit umgeschaltet wird.

3. Baumaschine nach Anspruch 1 oder 2, wobei:
der Einstellungsmechanismus (70) so ausgelegt ist, dass die Laufgeschwindigkeit der Baumaschine (1) auf einen Kriechmodus eingestellt werden kann, in dem eine Laufgeschwindigkeit der Baumaschine (1) niedriger ist als die niedrige Geschwindigkeit,
die Steuereinheit (60) ausgelegt ist, um eine Laufgeschwindigkeit der Baumaschine (1), die basierend auf den Drehzahlsignalen berechnet wurde, und eine eingestellte Geschwindigkeit im Kriechmodus durch den Einstellungsmechanismus (70) zu vergleichen und, wenn die Laufgeschwindigkeit die eingestellte Geschwindigkeit überschreitet, ausgelegt ist, um so aktiviert zu werden, um einen Stromwert, der dem einen oder den mehreren Druckanpassungs-Solenoidventilen (61, 62) zugeführt wurde, zu ändern, den Primärdruck des an die ferngesteuerten Ventile (21, 22, 23, 24) zugeführten Hydrauliköls zu bestimmen, und den Sekundärdruck des aus den ferngesteuerten Ventilen (21, 22, 23, 24) zugeführten Hydrauliköls auf einen Druck zu ändern, der dem Primärdruck entspricht, um das Hydrauliköl den Pumpen (31, 32) zuzuführen und
die Pumpen (31, 32) so aktiviert werden, dass die Strömungsrate des von jeder der Pumpen (31, 32) ausgegebenen Hydrauliköls gemäß dem Sekundärdruck konstant gehalten wird, wodurch die Baumaschine (1) mit der eingestellten Geschwindigkeit im Kriechmodus, eingestellt durch den Einstellmechanismus (70) läuft.

4. Baumaschine nach einem der Ansprüche 1 bis 3, wobei:
unabhängig davon, ob eine Betätigung der ferngesteuerten Ventile (21, 22, 23, 24) eine Form dafür ist, um die Baumaschine (1) mit der hohen Geschwindigkeit laufen zu lassen, wenn die Steuereinheit (60) basierend auf den Drehzahlsignalen beurteilt, dass die Baumaschine (1) mit der niedrigen Geschwindigkeit läuft,
die Steuereinheit (60) ausgelegt ist, um so aktiviert zu werden, um einen Stromwert, der dem einen oder den mehreren Druckanpassungs-Solenoidventilen (61, 62) zugeführt wurde, zu ändern, den Primärdruck des an die ferngesteuerten Ventile (21, 22, 23, 24) zugeführten Hydrauliköls zu bestimmen, und den Sekundärdruck des aus den ferngesteuerten Ventilen (21, 22, 23, 24) zugeführten Hydrauliköls auf einen Druck anzupassen, der dem Primärdruck entspricht, um das Hydrauliköl den Pumpen (31, 32) zuzuführen und
die Pumpen (31, 32) so aktiviert werden, dass die Strömungsrate des von jeder der Pumpen (31, 32) ausgegebenen Hydrauliköls gemäß dem Sekundärdruck erniedrigt wird, wodurch die Laufgeschwindigkeit der Baumaschine (1) auf die niedrige Geschwindigkeit umgeschaltet wird.

5. Baumaschine nach einem der Ansprüche 1 bis 4, wobei:
wenn von einer Form, in der die Drehzahl der Laufmotoren (33) der Baumaschine (1) niedrig ist und ein Motordrehmoment hoch ist, zu einer Form gewechselt wird, in der die Drehzahl der Laufmotoren (33) hoch ist und das Motordrehmoment niedrig ist,
die Steuereinheit (60) so aktiviert wird, um einen Stromwert, der dem einen oder den mehreren Druckanpassungs-Solenoidventilen (61, 62) zugeführt wurde, zu ändern, den Primärdruck des an die ferngesteuerten Ventile (21, 22, 23, 24) zugeführten Hydrauliköls zu bestimmen, und den Sekundärdruck des aus den ferngesteuerten Ventilen (21, 22, 23, 24) zugeführten Hydrauliköls auf einen Druck zu ändern, der dem Primärdruck entspricht, um das Hydrauliköl den Pumpen (31, 32) zuzuführen und
die Pumpen (31, 32) so aktiviert werden, dass die Strömungsrate des von jeder der Pumpen (31, 32) ausgegebenen Hydrauliköls gemäß dem Sekundärdruck erhöht wird, wodurch die Laufgeschwindigkeit der Baumaschine (1) automatisch von der niedrigen Geschwindigkeit auf die hohe Geschwindigkeit umgeschaltet wird.

6. Baumaschine nach einem der Ansprüche 1 bis 3, wobei:
wenn die Betätigung des ferngesteuerten Ventils (21, 22, 23, 24) auf vollständig geöffnet eingestellt ist und ein Drucksignal von einem Drucksensor (45) einen Druck detektiert, der identisch mit der vollständigen Öffnung ist, die Laufgeschwindigkeit automatisch von einer hohen Geschwindigkeit auf eine niedrige Geschwindigkeit umgeschaltet wird, wenn dieser kleiner oder gleich eines eingestellten Werts ist, und von einer niedrigen Geschwindigkeit auf eine hohe Geschwindigkeit geschaltet wird, wenn dieser größer oder gleich eines eingestellten Werts ist.

7. Laufsteuerverfahren zum Steuern einer Baumaschine (1), umfassend einen linken Laufmechanismus (8), der auf einer linken Seite der Baumaschine (1) bereitgestellt ist und durch eine erste HST-Schaltung (30) konfiguriert ist, und einen rechten Laufmechanismus (8), der auf einer rechten Seite der Baumaschine (1) bereitgestellt ist und durch eine zweite HST-Schaltung (30) konfiguriert ist, wobei das Laufsteuerverfahren die folgenden Schritte umfasst:
Bereitstellen von ferngesteuerten Ventilen (21, 22, 23, 24), die einen Betrieb der Baumaschine (1) steuern, eines oder mehrerer Druckanpassungs-Solenoidventile (61, 62), die einen Primärdruck eines an die ferngesteuerten Ventile (21, 22, 23, 24) zugeführten Hydrauliköls anpassen, eines Einstellmechanismus (70) zum Ausführen einer fixen Einstellung, um die Baumaschine (1) einen gewünschten Vorgang durchführen zu lassen, und eine Steuereinheit (60) zum Steuern des linken und des rechten Laufmechanismus (8) an einem Laufsteuermechanismus;
Konfigurieren des linken und des rechten Laufmechanismus (8), um dazu in der Lage zu sein, eine Laufgeschwindigkeit der Baumaschine (1) zwischen einer hohen Geschwindigkeit und einer niedrigen Geschwindigkeit, die niedriger ist als die hohe Geschwindigkeit, gemäß Betätigungsausmaßen der ferngesteuerten Ventile (21, 22, 23, 24) umzuschalten;
Bereitstellen einer Pumpe (31, 32) und eines Laufmotors (33) an jeder aus der ersten und der zweiten HST-Schaltung (30);
Verbinden von Steuerleitungen (41, 42, 43, 44), die sich von den ferngesteuerten Ventilen (21, 22, 23, 24) erstrecken und die ermöglichen, dass das aus den ferngesteuerten Ventilen (21, 22, 23, 24) zugeführte Hydrauliköl durch diese zu den Pumpen (31, 32) strömt;
Anbringen eines Drucksensors (45) an jeder der Steuerleitungen (41, 42, 43, 44), der einen Druck des durch die Steuerleitung (41, 42, 43, 44) strömenden Hydrauliköls misst;
Anbringen eines Rotationssensors (65) an jedem der Laufmotoren (33), der eine Drehzahl des Laufmotors (33) misst;
Aktivieren der ferngesteuerten Ventile (21, 22, 23, 24) unabhängig von einer manuellen Betätigung der ferngesteuerten Ventile (21, 22, 23, 24) durch die Steuereinheit (60), um den Druck des aus den ferngesteuerten Ventilen (21, 22, 23, 24) zugeführten Hydrauliköls basierend auf einem Einstellsignal von dem Einstellmechanismus (70), von Drucksignalen von den Drucksensoren (45) und Drehzahlsignalen von den Rotationssensoren (65) anzupassen; und
Anpassen einer Strömungsrate des aus jeder der Pumpen (31, 32) abgegebenen Hydrauliköls durch die ferngesteuerten Ventile (21, 22, 23, 24) durch Ändern oder Konstanthalten des Drucks des durch die Steuerleitungen (41, 42, 43, 44) strömenden Hydrauliköls.

## Revendications

1. Machine de construction (1) comprenant :
un mécanisme de déplacement vers la gauche (8) fourni à gauche de la machine de construction (1) et configuré par un premier circuit de transmission hydrostatique, HST, (30) ;
un mécanisme de déplacement vers la droite (8) fourni à droite de la machine de construction (1) et configuré par un second circuit de transmission HST (30) ; et
un mécanisme de commande de déplacement qui commande les mécanismes de déplacement vers la gauche et vers la droite (8) ;
dans lequel le mécanisme de commande de déplacement comprend :
des soupapes de régulation distante (21, 22, 23, 24) qui régulent un fonctionnement de la machine de construction (1) ;
une ou plusieurs électrovannes d'ajustement de pression (61, 62) qui ajustent une pression primaire d'une huile hydraulique fournie aux soupapes de régulation distante (21, 22, 23, 24) ;
un mécanisme de réglage (70) pour exécuter un réglage fixe afin d'amener la machine de construction (1) à mettre en œuvre une opération souhaitée ; et
un régulateur (60) destiné à réguler les mécanismes de déplacement vers la gauche et vers la droite (8), dans lequel :
les mécanismes de déplacement vers la gauche et vers la droite (8) sont configurés de manière à être en mesure de commuter une vitesse de déplacement de la machine de construction (1) entre une vitesse élevée et une vitesse faible, inférieure à la vitesse élevée, conformément à des quantités d'actionnement des soupapes de régulation distante (21, 22, 23, 24) ;
les premier et second circuits de transmission HST (30) sont chacun équipés d'une pompe (31, 32) et d'un moteur de déplacement (33) ;
les pompes (31, 32) sont chacune connectées à des conduites pilotes (41, 42, 43, 44) s'étendant à partir des soupapes de régulation distante (21, 22, 23, 24) et permettant à l'huile hydraulique fournie par les soupapes de régulation distante (21, 22, 23, 24) de circuler à travers celles-ci ;
les conduites pilotes (41, 42, 43, 44) sont chacune équipées d'un capteur de pression (45) qui mesure une pression de l'huile hydraulique circulant à travers la conduite pilote (41, 42, 43, 44) ;
les moteurs de déplacement (33) sont chacun équipés d'un capteur de rotation (65) qui mesure une vitesse de rotation du moteur de déplacement (33) ;
le régulateur (60) est configuré de manière à activer les soupapes de régulation distante (21, 22, 23, 24) indépendamment d'une opération manuelle de celles-ci, de manière à ajuster la pression de l'huile hydraulique fournie à partir des soupapes de régulation distante (21, 22, 23, 24), sur la base d'un signal de réglage provenant du mécanisme de réglage (70), de signaux de pression provenant des capteurs de pression (45) et de signaux de vitesse de rotation provenant des capteurs de rotation (65) ; et
les soupapes de régulation distante (21, 22, 23, 24) sont configurées de manière à ajuster un débit de l'huile hydraulique refoulée par chacune des pompes (31, 32), en modifiant ou en maintenant constante la pression de l'huile hydraulique qui circule à travers les conduites pilotes (41, 42, 43, 44).

2. Machine de construction selon la revendication 1, dans laquelle :
le régulateur (60) est configuré de manière à évaluer si les soupapes de régulation distante (21, 22, 23, 24) ont mis en œuvre une opération visant à déplacer l'un des mécanismes de déplacement vers la gauche et vers la droite (8), vers l'avant ou vers l'arrière, ou l'un des mécanismes de déplacement vers la gauche et vers la droite (8) vers l'avant, et l'autre vers l'arrière, sur la base de signaux de pression provenant des capteurs de pression (45), et est configuré de manière à s'activer de manière à modifier une valeur de courant fournie à ladite une ou auxdites plusieurs électrovannes d'ajustement de pression (61, 62), à déterminer la pression primaire de l'huile hydraulique fournie à la soupape de régulation distante exploitée (21, 22, 23, 24), et à ajuster la pression secondaire de l'huile hydraulique fournie par la soupape de régulation distante exploitée (21, 22, 23, 24), à une pression correspondant à la pression primaire pour fournir l'huile hydraulique à la pompe correspondante (31, 32) ; et
la pompe correspondante (31, 32) est activée de sorte que le débit de l'huile hydraulique refoulée par la pompe correspondante (31, 32) est maintenu constant conformément à la pression secondaire, ce qui permet de commuter par conséquent la vitesse de déplacement de l'un ou des deux mécanismes de déplacement vers la gauche et vers la droite (8) correspondant à la soupape de régulation distante exploitée (21, 22, 23, 24), de la vitesse élevée à la vitesse faible.

3. Machine de construction selon la revendication 1 ou 2, dans laquelle :
le mécanisme de réglage (70) est configuré de sorte que la vitesse de déplacement de la machine de construction (1) peut être réglée sur un mode de vitesse lente où une vitesse de déplacement de la machine de construction (1) est inférieure à la vitesse faible ;
le régulateur (60) est configuré de manière à comparer une vitesse de déplacement de la machine de construction (1), calculée sur la base des signaux de vitesse de rotation, et une vitesse de consigne en mode de vitesse lente réglée par le mécanisme de réglage (70) et, lorsque la vitesse de déplacement dépasse la vitesse de consigne, il est configuré de manière à s'activer de manière à modifier une valeur de courant fournie à ladite une ou auxdites plusieurs électrovannes d'ajustement de pression (61, 62), à déterminer la pression primaire de l'huile hydraulique fournie aux soupapes de régulation distante (21, 22, 23, 24) et à ajuster la pression secondaire de l'huile hydraulique fournie par les soupapes de régulation distante (21, 22, 23, 24), à une pression correspondant à la pression primaire, pour fournir l'huile hydraulique aux pompes (31, 32) ; et
les pompes (31, 32) sont activées de sorte que le débit de l'huile hydraulique refoulée par chacune des pompes (31, 32) est maintenu constant conformément à la pression secondaire, ce qui amène par conséquent la machine de construction (1) à se déplacer à la vitesse de consigne en mode de vitesse lente, réglée par le mécanisme de réglage (70).

4. Machine de construction selon l'une quelconque des revendications 1 à 3, dans laquelle :
indépendamment du fait qu'une opération des soupapes de régulation distante (21, 22, 23, 24) correspond à une forme visant à amener la machine de construction (1) à se déplacer à la vitesse élevée, lorsque le régulateur (60) évalue que la machine de construction (1) se déplace à la vitesse faible sur la base des signaux de vitesse de rotation,
le régulateur (60) est configuré de manière à s'activer de façon à modifier une valeur de courant fournie à ladite une ou auxdites plusieurs électrovannes d'ajustement de pression (61, 62), à déterminer la pression primaire de l'huile hydraulique fournie aux soupapes de régulation distante (21, 22, 23, 24), et à ajuster la pression secondaire de l'huile hydraulique fournie par les soupapes de régulation distante (21, 22, 23, 24), à une pression correspondant à la pression primaire, pour fournir l'huile hydraulique aux pompes (31, 32) ; et
les pompes (31, 32) sont activées de sorte que le débit de l'huile hydraulique refoulée par chacune des pompes (31, 32) est diminué conformément à la pression secondaire, ce qui permet de commuter la vitesse de déplacement de la machine de construction (1) à la vitesse faible.

5. Machine de construction selon l'une quelconque des revendications 1 à 4, dans laquelle :
lors du passage d'une forme où la vitesse de rotation des moteurs de déplacement (33) de la machine de construction (1) est faible et le couple moteur est élevé, à une forme où la vitesse de rotation des moteurs de déplacement (33) est élevée et le couple moteur est faible,
le régulateur (60) est activé de manière à modifier une valeur de courant fournie à ladite une ou auxdites plusieurs électrovannes d'ajustement de pression (61, 62), à déterminer la pression primaire de l'huile hydraulique fournie aux soupapes de régulation distante (21, 22, 23, 24), et à ajuster la pression secondaire de l'huile hydraulique fournie par les soupapes de régulation distante (21, 22, 23, 24), à une pression correspondant à la pression primaire, pour fournir l'huile hydraulique aux pompes (31, 32) ; et
les pompes (31, 32) sont activées de sorte que le débit de l'huile hydraulique refoulée par chacune des pompes (31, 32) est augmenté conformément à la pression secondaire, ce qui permet par conséquent de commuter automatiquement la vitesse de déplacement de la machine de construction (1), de la vitesse faible à la vitesse élevée.

6. Machine de construction selon l'une quelconque des revendications 1 à 3, dans laquelle,
lorsque le fonctionnement de la soupape de régulation distante (21, 22, 23, 24) est réglé sur une position de manette maximale et qu'un signal de pression provenant d'un capteur de pression (45) détecte une pression équivalente à celle de la position de manette maximale, la vitesse de déplacement est automatiquement commutée de la vitesse élevée à la vitesse faible, lorsqu'elle est inférieure ou égale à une valeur de consigne, et de la vitesse faible à la vitesse élevée, lorsqu'elle est supérieure ou égale à une valeur de consigne.

7. Procédé de commande de déplacement pour commander une machine de construction (1) comprenant un mécanisme de déplacement vers la gauche (8) fourni à gauche de la machine de construction (1) et configuré par un premier circuit de transmission hydrostatique, HST, (30), et un mécanisme de déplacement vers la droite (8) fourni à droite de la machine de construction (1) et configuré par un second circuit de transmission HST (30), le procédé de commande de déplacement comprenant les étapes ci-dessous consistant à :
fournir des soupapes de régulation distante (21, 22, 23, 24) qui régulent un fonctionnement de la machine de construction (1), une ou plusieurs électrovannes d'ajustement de pression (61, 62) qui ajustent une pression primaire d'une huile hydraulique fournie aux soupapes de régulation distante (21, 22, 23, 24), un mécanisme de réglage (70) pour exécuter un réglage fixe afin d'amener la machine de construction (1) à mettre en œuvre une opération souhaitée, et un régulateur (60) pour réguler les mécanismes de déplacement vers la gauche et vers la droite (8), à un mécanisme de commande de déplacement ;
configurer les mécanismes de déplacement vers la gauche et vers la droite (8) afin qu'ils soient en mesure de commuter une vitesse de déplacement de la machine de construction (1) entre une vitesse élevée et une vitesse faible laquelle est inférieure à la vitesse élevée, conformément à des quantités d'actionnement des soupapes de régulation distante (21, 22, 23, 24) ;
fournir une pompe (31, 32) et un moteur de déplacement (33) à chacun des premier et second circuits de transmission HST (30) ;
connecter des conduites pilotes (41, 42, 43, 44) s'étendant à partir des soupapes de régulation distante (21, 22, 23, 24) et permettant à l'huile hydraulique fournie par les soupapes de régulation distante (21, 22, 23, 24) de circuler à travers celles-ci jusqu'aux pompes (31, 32) ;
fixer, à chacune des conduites pilotes (41, 42, 43, 44), un capteur de pression (45) qui mesure une pression de l'huile hydraulique circulant à travers la conduite pilote (41, 42, 43, 44) ;
fixer, à chacun des moteurs de déplacement (33), un capteur de rotation (65) qui mesure une vitesse de rotation du moteur de déplacement (33) ;
activer les soupapes de régulation distante (21, 22, 23, 24), indépendamment d'une opération manuelle des soupapes de régulation distante (21, 22, 23, 24) par le régulateur (60), de manière à ajuster la pression de l'huile hydraulique fournie par les soupapes de régulation distante (21, 22, 23, 24), sur la base d'un signal de réglage provenant du mécanisme de réglage (70), de signaux de pression provenant des capteurs de pression (45) et de signaux de vitesse de rotation provenant des capteurs de rotation (65) ; et
ajuster un débit de l'huile hydraulique refoulée par chacune des pompes (31, 32) par les soupapes de régulation distante (21, 22, 23, 24), en modifiant, ou en maintenant constante, la pression de l'huile hydraulique qui circule à travers les conduites pilotes (41, 42, 43, 44).
